# EUROPEAN PATENT APPLICATION

(11) **EP 2 138 889 A1**
(43) Date of publication of application: **30.12.2009**
(21) Application number: 08159070.5
(22) Date of filing: 26.06.2008
(51) Int. Cl.: G02F 1/1337, C08F 220/24, C08F 230/08

(54) **Alignment layer for LCD**

(71) Applicant: Komitov, Lachezar, 412 96 Göteborg (SE)
(72) Inventor: Komitov, Lachezar, 411 29 Göteborg (SE)
(74) Representative: Fritsche, Daniel

(57) **Abstract**

A polymer for use in an alignment layer for a liquid crystal material is provided. The polymer comprises a polymer backbone comprising a plurality of repeating units, said repeating units being divided into at least two groups, wherein each repeating unit in a first group of said repeating units is functionalized with a pendant sidechain of a first type S¹; each repeating unit in a second group of said repeating units is functionalized with a pendant sidechain of a second type S²; said first type of sidechain S¹ comprising a fluorine substituted hydrocarbon group; and said second type of sidechain S² comprising a siloxane.

The polymer of the invention promotes homeotropic alignment of liquid crystal materials.

## Description

### Technical Field of the Invention

The present invention relates to a polymer for use as an alignment layer in a liquid crystal device, a liquid crystal device comprising such alignment layer and a method for the manufacture of such a device, alignment layer and polymer.

### Technical Background

One of the basic operational principle of liquid crystal displays and devices is the switching of the orientation of the liquid crystal molecules by an applied electric field that couples to the dielectric anisotropy of the liquid crystal material (dielectric coupling). Such a coupling gives rise to an electro-optic response quadratic with the applied electric field, i.e. independent of the field polarity.

The dielectric anisotropy (Δε) of a material having an ordered molecular structure (ordered phase) possessing a structural anisotropy, such as a crystalline or a liquid crystalline structure, is the difference between the dielectric constants measured in perpendicular and parallel direction, respectively, to the preferred molecular orientation in this material.

When an electric field is applied across a liquid crystal material exhibiting a positive dielectric anisotropy (Δε > 0), the molecules will align their long axis along (or substantially along) the direction of the electric field.

When an electric field is applied across a liquid crystal material exhibiting a negative dielectric anisotropy (Δε < 0), the molecules will align their long axis perpendicular (or substantially perpendicular) to the direction of the electric field.

Liquid crystal molecules are long rod-like molecules (so-called calamitic molecules) which have the ability to align along their long axis in a certain preferred direction (orientation). The average direction of the molecules is specified by a vector quantity and is called director.

In liquid crystal displays, the desired initial alignment of the liquid crystal layer in the absence of an external field, such as an electric field, is generally achieved by appropriate surface treatment of the confining solid substrate surfaces, such as by applying a so-called (surface-director) alignment layer (orientation layer) on the confining substrate surfaces facing said liquid crystal bulk. The initial liquid crystal alignment is defined by solid surface/liquid crystal interactions. The orientation of the liquid crystal molecules adjacent to the confining surface is transferred to the liquid crystal molecules in the bulk via elastic forces, thus imposing essentially the same alignment to all liquid crystal bulk molecules.

The director of the liquid crystal molecules near the confining substrate surfaces (herein also called surface director) is constrained to point in a certain direction, such as perpendicular to (also referred to as homeotropic or vertical) or in parallel with (also referred to as planar) the confining substrate surfaces. The type of alignment in liquid crystal displays operating on the coupling between liquid crystal dielectric anisotropy and applied electric field is chosen in accordance with the sign of the dielectric anisotropy, the direction of the applied electric field and the desired type of switching mode (in-plane or out-of-plane).

In out-of-plane switching liquid crystal cells employing a liquid crystal bulk having a negative dielectric anisotropy, it is important to uniformly orient the director of the liquid crystal bulk molecules (in the field-off state) vertically to the substrate surfaces (so-called homeotropic alignment).

An example of a method for establishing a homeotropic alignment comprises coating the confining substrate surfaces with a surfactant, such as lecithin or hexadecyltrimethyl ammonium bromide. The coated substrate surfaces is then also preferably rubbed in a predetermined direction, so that the field-induced planar alignment of the liquid crystal molecules will be oriented in the predetermined rubbing direction. This method may give good results in laboratory studies, but has never found industrial acceptance due to that long term stability is not obtained as the alignment layer is slowly dissolved in the bulk liquid crystal (J. Cognard, Mol. Cryst. Liq. Cryst., Suppl. Ser., 1982, 1, 1).

Another example of a method for establishing a homeotropic alignment is discussed by Samulski, E.T. et al in WO 2006/0842020, where a patterned alignment layer for homeotropic alignment allegedly is obtained from a low surface energy material of perfluorpolyether.

However, the alignment layer discussed in WO 2006/0842020 requires patterning of the alignment layer which cannot be perfectly reproducible during applications. Further, the macromolecular backbone in the alignment material described in WO 2006/0842020 is subject to hydrolytic degradation, resulting in a drop in molecular weight and deterioration of the alignment structure over time. In out-of-plane switching liquid crystal cells employing a liquid crystal bulk having a positive dielectric anisotropy and in in-plane switching liquid crystal cells employing a liquid crystal bulk having a positive or negative dielectric anisotropy, it is important to uniformly orient the director of the liquid crystal bulk molecules (in the field-off state) in parallel with the substrate surfaces (so-called planar alignment). For twisted nematic liquid crystal cells, it is also important to orient the liquid crystal bulk molecules at a certain inclined orientation angle (pre-tilt angle) to the substrate.

Known methods for establishing alignment layers are, for instance, the inorganic film vapour deposition method and the organic film rubbing method. In the inorganic film vapour deposition method, an inorganic film is formed on a substrate surface by vapour-deposition of an inorganic substance, such as silicon oxide, obliquely to the confining substrate so that the liquid crystal molecules are oriented by the inorganic film in a certain direction depending on the inorganic material and evaporation conditions. Since the production cost is high, and the method thus is not suitable for large-scale production, this method is practically not used.

According to the organic film rubbing method, an organic coating of, for instance, polyvinyl alcohol, polyoxyethylene, polyamide or polyimide, is formed on a substrate surface. The organic coating is thereafter rubbed in a predetermined direction using a cloth of e.g. cotton, nylon or polyester, so that the liquid crystal molecules in contact with the layer will be oriented in the rubbing direction.

Polyvinyl alcohols (PVA) are commercially rarely used as alignment layers since these polymers are hydrophilic, hygroscopic polymers that may adsorb moisture adversely affecting the molecular orientation of the polymer and thus the liquid crystal device performance. In addition, PVA may attract ions which also impairs the liquid crystal device performance.

Also polyoxyethylenes may attract ions, thus resulting in impaired liquid crystal device performance.

Polyamides have a low solubility in most commonly accepted solvents. Therefore, polyamides are seldom used commercially in liquid crystal device manufacturing.

Polyimides are in most cases used as organic surface coating due to their comparatively advantageous characteristics, such as chemical stability, thermal stability, etc. The application of a polyimide layer generally includes a baking step at 200-300°C as described below.

Polyimides may be prepared according to, for instance, Scheme I or Scheme II below:

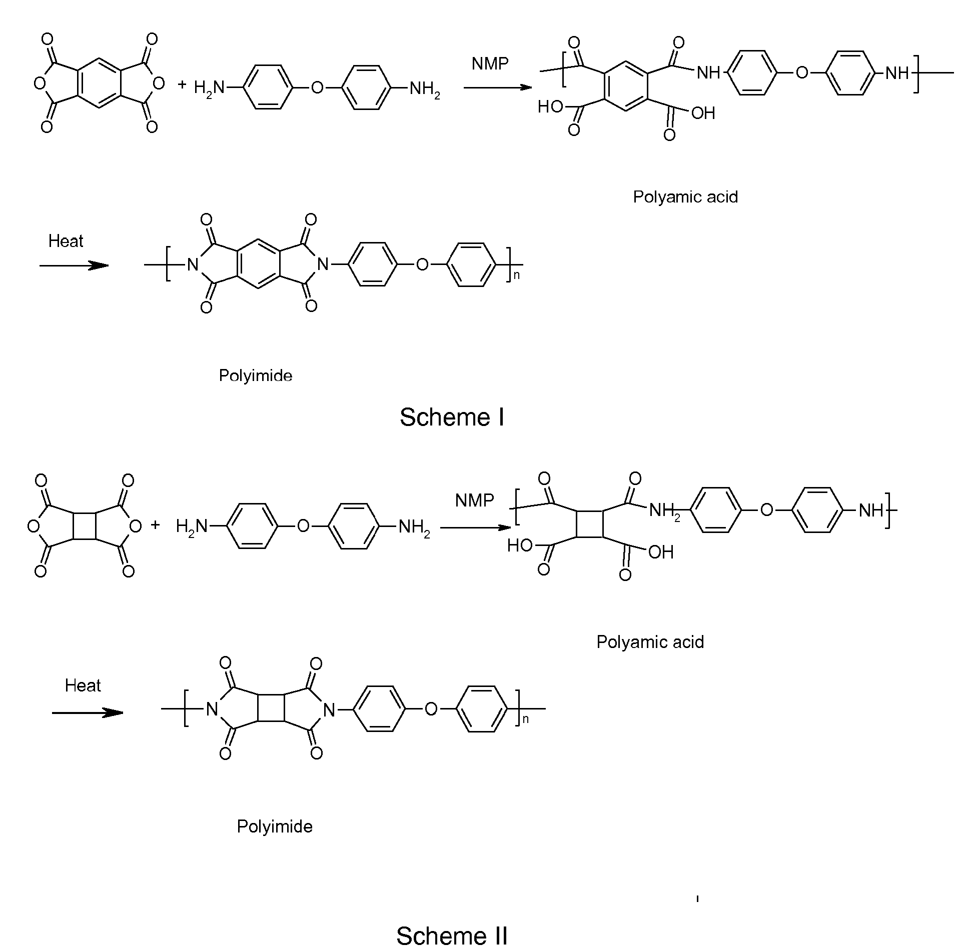

In the first step, equimolar amounts of a tetracarboxylic acid anhydride and a diamine are mixed in an amide solvent, such as N-methylpyrrolidone (NMP). A spontaneous reaction occurs and a polyamic acid, which is a pre-polymer of polyimide, is formed. In this state, the pre-polymer is distributed to its users, such as LCD manufacturers. However, since the pre-polymer solution is rather unstable at room temperature, the solution is generally cooled upon transportation and storage to avoid degradation, or any other unwanted chemical reaction, of the pre-polymer.

Generally, the polyamic acid is diluted by the liquid crystal device manufacturer to about 0.5 %, often with a mixture of NMP and Butyl Cellosolve 4:1 (w/w).

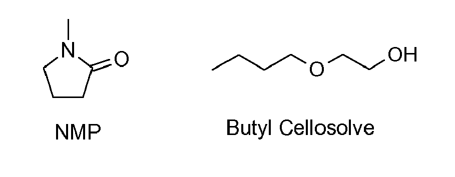

The polyamic acid is generally applied using, for instance, spin coating or some type of printing technique on a glass substrate coated with a transparent, patterned indium tin oxide (ITO) electrode layer. The layer of polyamic acid is then dried in an oven at around 100°C, and thereafter heated to about 200°C for 1-2 h. During this heating cycle polyamic acid is converted to polyimide. This step is also referred to as curing or baking of the polyimide. The resulting polyimide is thermally very stabile and insoluble in all solvents. The polymer can only be removed by degrading it, for instance, using an alkaline medium.

A drawback of this organic film application process is the baking step, resulting in both a long production time and high production costs.

Furthermore, high temperatures, such as about 200°C, should be avoided in the manufacturing of, for instance, liquid-crystal-on-silicon (LCOS) and thin film transistors (TFT) since high temperatures may result in decreased yields and thus film defects.

It is also difficult to control the anchoring strength between the organic film applied using said organic film application process and a liquid crystal bulk layer.

It would be a great advantage if said baking step could be eliminated and the above disadvantages avoided.

### Summary of the Invention

It is an object of the present invention to provide means for obtaining a homeotropic surface alignment of liquid crystal material.

It is a further object of the present invention to provide a surface director alignment layer for obtaining such a homeotropic surface alignment of liquid crystal material, especially such an alignment layer that easily can be established on a substrate.

It is further an object of the present invention to provide a liquid crystal device utilizing such surface director alignment layers.

Hence, in a first aspect, the present invention provides a polymer for use in an alignment layer for a liquid crystal material, comprising a polymer backbone comprising a plurality of repeating units, said repeating units being divided into at least two groups, wherein
- each repeating unit in a first group of said repeating units is functionalized with a pendant sidechain of a first type S¹;
- each repeating unit in a second group of said repeating units is functionalized with a pendant sidechain of a second type S²;
- said first type of sidechain S¹ comprising a fluorine substituted hydrocarbon group; and
- said second type of sidechain S² comprising a siloxane.

Liquid crystal materials in contact with an alignment layer based on the inventive polymer will tend to obtain a homeotropic alignment, which is highly desired in many applications. Without wishing to be bound to any specific theory, it is assumed that the homeotropic alignment of LC materials on such alignment layers is due to the self-assembling of the fluorinated side chains at the surface. This surface organization is favoured by the high chemical incompatibility of the fluorinated component with the silicon component of the polymeric material forming the alignment layer. As a result, the poly(dimethylsiloxane) present in the alignment material is segregated from the fluorinated component of the material so that poly(dimethylsiloxane) covers the substrate surface whereas the fluorinated moieties, due to its level of incompatibility, segregates in a layer floating over the poly(dimethylsiloxane). The self-assembly of the fluorinated side chains on a continuous array is driven by dipolar forces and oleophilicity of the fluorinated side chains. Self-assembly of fluorinated side chains is previously known from X. Li, L. Andruzzi, E. Chiellini, G. Galli, C.K. Ober, A. Hexemer, E. J. Kramer, D. A. Fischer, Macromolecules, 35, 8078 (2002).

The vertical orientation of the Fluorine-containing side chains of the alignment layer promotes homeotropic arrangement of the liquid crystal molecules at the interface between the liquid crystal material and the alignment layer. The homeotropic arrangement is, via elastic forces, transferred to the liquid crystal bulk, resulting in homeotropic alignment of the liquid crystal bulk molecules. The LC-materials obtains a translational order (they are essentially vertically oriented, and free to slide with respect to each other) but without in-plane order The strong promotion of homeotropic alignment in the LC material, together with the mobility of the sidechains of the polymer results in a reduced threshold voltage for the field -induced reorientation of the liquid crystal bulk and shorter rise time as well as a faster relaxation (back to homeotropic alignment) of switched LC-molecules. Hence, the polymer of the present invention may be used to obtain shorter response time of a liquid crystal device, since the relaxation often is the slow event in a switching-relaxation cycle.

A further advantage with this type of polymers is that they are soluble in organic solvents, such as chloroform, tetrahydrofuran, mixtures of xylene and butyl acetate, fluorocarbon, dimethylacetamide, dimethylformamide, and N-methylpyrrolidone. Since the polymers according to the present invention are soluble in organic solvents, a solution of the polymer per se (and not a solution of a pre-polymer thereof) may be applied on a substrate surface for use, after evaporation of the solvent, as a surface-director alignment layer in a liquid crystal device without the need of a curing step which, as disclosed in the Technical Background, is used in processes involving prior art alignment materials, such as polyimides. Thus, the step in which a pre-polymer is heated for about 1-2 h at about 180-250°C is avoided. The avoidance of the curing step decreases the production cycle times for liquid crystal devices, thus saving time, energy and money. Up to about 20% shorter production times, in comparison to conventional production processes, may be achieved using the polymers according to the present invention.

In addition, the tough heating during curing of prior art alignment materials may cause defects and reduce yield. These disadvantages are also avoided using the polymers according to the invention and the yield may be substantially increased.

Furthermore, no advanced oven equipment is required and thus investment costs can be reduced for a production line using the polymers according to the invention.

Another advantage of the polymers according to the present invention is that the polymers may be applied not only on glass substrates but also on plastic substrates, which cannot be used if a heating (curing) step is employed. Application on plastic substrates enables the use of a variety of substrate forms, such as curved substrate surfaces and rolled-up substrate surfaces.

Still another advantage of the polymers according to the present invention is that said solutions of the polymers in organic solvents are stable at room temperature, i.e. the dissolved polymers will not degrade upon storage at room temperature. Thus, there is no need to cool the solutions, which is often required for the pre-polymer solutions used according to prior art.

In embodiments of the present invention, each of said sidechains S¹ independently comprises a Cₙ-fluoroalkyl group, preferably a Cₙ-perfluoroalkyl group, where n = 2 to 15, for example 6 to 12, such as 8 to 10.

For effective interaction between the fluorine-containing S¹-sidechains and the silicon-containing S²-sidechains, and for effective homeotropic alignment of LC-materials, such groups are preferred.

In embodiments of the present invention each of said sidechains S² independently comprises a Siₘ-siloxane chain, where m = 2 to 130, for example 20 to 80, such as 60 to 70.

For effective interaction between the fluorine-containing S¹-sidechains and the silicon-containing S²-sidechains, and for effective homeotropic alignment of LC-materials, such groups are preferred.

In embodiments of the present invention the ratio n/m is from 4/3 to 12/130.

The relative length of the S¹ and S²-sidechains is an important parameter in optimizing the alignment properties of alignment layers base on the inventive polymer. The ratio between CF₂-and SiO-repeat motifs is preferably in the above range.

In embodiments of the present invention said sidechain of a first type S¹ and said side chain of a second type S² each independently are attached to said polymer backbone by a linker group, preferably comprising from 2 to 10, such as 4 to 8, linker atoms.

The length of the linker group is bound to the possibility of obtaining a compromise between flexibility, the thermodynamic stability and the homogeneity of the alignment layer.

In embodiments of the present invention the polymer of the present invention may optionally and additionally comprise one or more of the following groups of repeating units:
- a third group of non-functionalized repeating units;
- a fourth group, wherein each repeating unit in said fourth group is functionalized by a pendant side chain, S⁴, capable of anchoring said polymer to a substrate;
- a fifth group, wherein each repeating unit in said fifth group independently is functionalized by pendant sidechain S⁵ selected from an aliphatic and an aromatic group;
a sixth group, wherein each repeating unit in said sixth group is functionalized by a pendant side chain S⁶ comprising a mesogenic group.

In embodiments of the present invention, the polymer backbone in the polymer of the present invention forms a continuous stretch of carbon atoms formed by said repeating units.

A polymer backbone forming a continuous chain of carbon atoms is only to a small extent subject to degradation, such as hydrolytic and/or oxidative degradation. Hence, the polymer chain is stable towards degradation.

In a second aspect, the present invention relates to a surface director alignment layer material, comprising at least a one polymer of the present invention and optionally at least one additional polymer.

In a third aspect, the present invention relates to a liquid crystal device comprising at least one confining substrate, a liquid crystal bulk layer and a surface director alignment layer arranged between said liquid crystal bulk layer and said substrate, wherein said surface director alignment layer comprises at least one polymer or surface alignment layer material of the present invention.

In a fourth aspect, the present invention relates to a method for the manufacture of a liquid crystal device, comprising the steps of:
a. providing a confining substrate;
b. arranging a polymer according to claim 1 or a surface director alignment material according to claim 12 on a surface of said substrate; and
c. arranging a liquid crystal bulk material in contact with said polymer.

For example, the step of arranging said polymer on said substrate may comprise in-situ polymerization of said polymer on said substrate, or coating a pre-polymerized polymer directly on the substrate.

Further, it is to be noted that the present invention relates to all possible combinations of the appended claims.

### Brief Description of the Drawings

These and other aspects of the present invention will be apparent from the following detailed description of the invention and by reference to the accompanying drawings.
It is to be noted that the drawings are not necessarily drawn to scale. For example, the dimensions of some features may be exaggerated for sake of clarity of the drawing.
Figure 1 illustrates, in cross-sectional view, an embodiment of a liquid crystal device of the present invention.
Figure 2 illustrates schematically the sidechain arrangement in an alignment layer of the present invention.
Figure 3 illustrates schematically the orientation of the liquid crystal molecules at the interface between the alignment layer of the present invention and the liquid crystal bulk material.

### Detailed Description of the Invention

The present invention relates to a polymer, especially suited for use as or in a surface director alignment layer, to the synthesis of such polymer and to liquid crystal devices, such as a liquid crystal display, utilizing such polymer as a surface director alignment layer.

In general, a polymer of the present invention comprises a polymer backbone comprising a plurality of repeating units, said repeating units being divided into at least two groups, wherein
each repeating unit in a first group of said repeating units is functionalized with a pendant sidechain of a first type S¹;
each repeating unit in a second group of said repeating units is functionalized with a pendant sidechain of a second type S²;
said first type of sidechain S¹ comprising a fluorine substituted hydrocarbon group; and
said second type of sidechain S² comprising a siloxane group.

Hence, a polymer of the present invention comprises a plurality of groups according to the following general formula

Z-L-S¹

and a plurality of groups according to the following general formula

Z-L-S²

where Z represents a portion of, such as a repeating unit, of the polymer backbone.

The sidechains, S¹ and S² are attached to the polymer backbone by a linker group L, typically comprising between 0 and 30 linking atoms, where 0 linking atoms represents the case where the sidechain group is attached directly on the polymer backbone.

Side-chains S¹ comprises a fluorine substituted hydrocarbon group. It is to be noted that the fluorine substituted hydrocarbon group optionally may be substituted also by other atoms or groups, such as heteroatoms, halogen atoms other than fluorine, -CN, -hydroxy, -COOH, etc.

The fluorine substituted hydrocarbon group may be a straight or branched group, and each carbon atom in the fluorine substituted hydrocarbon group may be attached to 0 to 3 fluorine atoms, as long as there is at least one carbon atom that is attached to a fluorine atom.

Typically, each carbon atom in the fluorine substituted hydrocarbon group may be attached to 1 to 3 fluorine atoms.

In a preferred embodiment, each of said sidechains S¹ independently comprises a Cₙ-fluoroalkyl group, preferably a Cₙ-perfluoralkyl group, where n = 2 to 15, for example 6 to 12, such as 8 to 10 , and comprising from 5 to 31, for example 13 to 25, such as 17 to 21 F-atoms.

A non-limiting examples of S¹ side chains, attached by a linker to the polymer backbone, where Z represents a part of the polymer backbone, L represents a linker and n is a non-zero integer, typically from about 2 to about 15, are provided in the following structural formula (I):

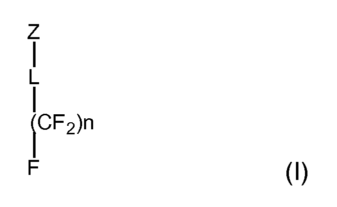

Sidechain S² comprises a siloxane, i.e. it comprises at least one Si-atom directly bound to at least one oxygen atom.

In a preferred embodiment, each of said sidechains S² independently comprises a straight or branched Siₘ-siloxane chain, where m = 2 to 130, for example 20 to 80, such as 60 to 70, and denotes the number of Si-atoms in the siloxane chain.

Typically, at least part of the silicon atoms in the siloxane of the S² side chain may be alkyl or aryl substituted, such as, but not limited to methyl, ethyl, propyl, butyl and/or phenyl substituted.

Non-limiting examples of S² side chains attached by a linker to the polymer backbone, where Z represents a part of the polymer backbone ,L represents a linker, R is an alkyl, alicylic group or aryl, m is a non-zero integer, such as from about 1 to about 130, are provided in the following structural formula (II):

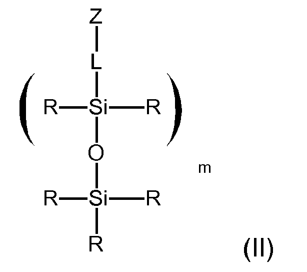

The relative length of the S¹ and S²-sidechains is an important parameter in optimizing the alignment properties of alignment layers based on the inventive polymer. The ratio n:m between CF₂-and SiO-repeat motifs is preferably, but not limited to, in the range of from 4/3 to 12/130.

As mentioned above, the sidechains are typically attached to the polymer backbone via a linker group, L, which comprises between 0 and 30 linking atoms. A linker of length 0 is to be taken as a direct bond

As used herein "the term linking atoms" represents those atoms forming the shortest non-interrupting chain of atoms from the sidechain to the polymer backbone. Any atoms, such as hydrogen atoms, OH-groups, etc pendant from the linker are not counted when assessing the length of the linker group.

Typically, the linker comprises from about 2 to about 10 linker atoms, such as from 4 to 8 linker atoms.

The linker is typically an optionally substituted hydrocarbon chain, such as an optionally substituted alkyl or alkyl-aryl chain.

In addition to the above first and second groups of repeating units, the polymer of the present invention may optionally and additionally comprise one or more of the following groups of repeating units:
- a third group of non-functionalized repeating units;
- a fourth group, wherein each repeating unit in said fourth group is functionalized by a pendant side chain, S⁴, capable of anchoring said polymer to a substrate;
- a fifth group, wherein each repeating unit in said fifth group independently is functionalized by pendant sidechain S⁵ selected from an aliphatic and an aromatic group;
- a sixth group, wherein each repeating unit in said sixth group is functionalized by a pendant side chain S⁶ comprising a mesogenic group.

It is to be noted that also other types of repeating units apart from those mentioned above may be incorporated in a polymer of the present invention.

The side chains S⁴ to S⁶ may, if needed, each be attached to the polymer backbone by means of a linker fragment L as described above.

The inclusion of repeating units of the polymer backbone where no sidechain is attached to the backbone results in spaces in between Si- and F-containing sidechains. Such spaces allows for LC molecules from the bulk to penetrate into the alignment layer, if they are homeotropically aligned. Hence, such spaces in the polymer promotes and stabilizes the homeotropic alignment of the LC-surface facing the alignment layer.

Anchoring sidechains may preferably be used to anchor the polymer to the underlying substrate. An anchoring side chain group S⁴ is typically an optionally substituted C₂ to C₂₀, for example C₂ to C₈, hydrocarbon chain with a functionalizing group in or at the end distant from the polymer backbone, which functionalizing group is capable of forming a bond, such as a covalent bond, an ion-bond or a hydrogen bond to chemical groups on the surface of a substrate, for example, but not limited to, free hydroxyl groups on a glass surface or e.g. epoxy, amino, thiol or isocyano groups introduced by preliminary activation of the substrate surface.

Non-limiting examples of such functionalizing groups suitable in an anchoring side chain includes amino, hydroxy, isocyano, and glycidyl groups. Those skilled in the art will be able to select the suitable functionalization on the anchoring group dependent on the substrate material.

Non-limiting examples of an anchoring sidechain group S⁴ are disclosed in the following structural formulas (III) to (VI) where Z, as above, represents a portion of the polymer backbone and L is linker group, preferably having the length of 1 to 10, such as 1 to 5 linker atoms, such as an alkyl linker:

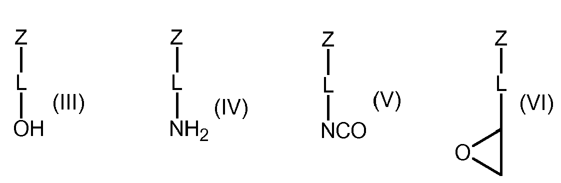

The physicochemical properties of the polymer of the invention, such as glass transition temperature Tg, brittle temperature, elastic modulus, coherence of deposited films etc may be adjusted to desired values by incorporating, in the polymer backbone repeating units comprising sidechains S⁵ selected from aliphatic and aromatic groups.

Further, the S⁵-containing sidechains on the polymer backbone results in spaces between S¹ and S² sidechains, and allows for LC molecules from the bulk to penetrate into the alignment layer, if they are homeotropically aligned. Hence, such spaces in the polymer promotes and stabilizes the homeotropic alignment of the LC-surface facing the alignment layer.

One objective of the polymer of the present invention is to be used as or in a surface director alignment layer, especially to promote homeotropic alignment of liquid crystal material in contact with the alignment layer. To tune the polymer of the present invention, such as to improve the alignment quality, repeating units comprising sidechains S⁶ comprising a mesogenic group may be incorporated in the polymer backbone.

Mesogenic sidechains, attached to the polymer backbone and arranged in the sidechain structure typically dominated by S¹ and S² sidechains will become homeotropically aligned. The homeotropic alignment of the mesogenic sidechains S⁶ will promote and stabilize homeotropic alignment of the LC-surface facing the alignment layer.

Non-limiting examples of mesogenic S⁶ sidechains includes for example cyano- and nitro-biphenyls, and the mesogenic sidechains disclosed in W02004/113470, incorporated herein by reference.

It is to be noted that the dielectric anisotropy of the mesogenic sidechains S⁶ is no issue in the present invention due to the homeotropic alignment that is forced upon the S⁶ sidechains by means of the S¹ and S²-sidechains of the polymer.

Further, the polymer of the present invention may be crosslinked by a crosslinking group connecting two separate repeating units a polymer of the present invention, such as by internal crosslinking, connecting two repeating units within the same polymer backbone chain or external crosslinking, connecting two separate polymer backbone chains, where at least one of the two represents a polymer of the present invention. It is also possible to use a crosslinking group to connect one polymer of the present invention with another polymer.

Crosslinking groups are typically straight or branched, optionally substituted hydrocarbon chains.

The cross linking may be performed after preparation of the linear fluorinated polymer of the present invention by using a cross linking agent comprising the crosslinking group functionalized in both ends with a reactive moiety capable of reacting with specific groups on the polymer.

Alternatively, the cross linking may be performed during the polymerization of the polymer by incorporating in the polymerization reaction mixture a bi-functional polymerizable compound containing the cross linking group arranged between two (or more) reactive groups to incorporate the crosslink in the polymer.

Non-limiting examples of such crosslinking groups comprises optionally substituted alkyls, polyethylene glycols and oligo- or poly-(hydroxyethylene). The chemical type of the two (or more) reactive groups in a bi-functional compound containing the crosslinking group arranged between the polymerizable reactive groups depends on the chemistry used for polymerizing the polymer of the invention. Typically, however, bis-(meth)acrylates, bis-(meth)acrylamides, bis-styrens, bis-dienes, etc, may conventionally be used.

Non-limiting example of bis-functional crosslinking compounds include, but are not limited to ethyleneglycoldimethacrylates, N,N'-hydroxyethylenebisacrylamides and methacryloxypropyl-terminated polydimetylsiloxanes. The length of the crosslinking group ranges from about 10 to above 100 linking atoms, and will depend on the type of linker as well as other factors.

An example of a methacryloxypropyl-terminated polydimetylsiloxane is illustrated in formula (VII), where n is a non-zero integer, such as from about 4 to about 100, for example 5-50, typically 8-20. Other, non-limiting examples of bis-functional crosslinking compounds are illustrated in formulas (VIII) and (IX)

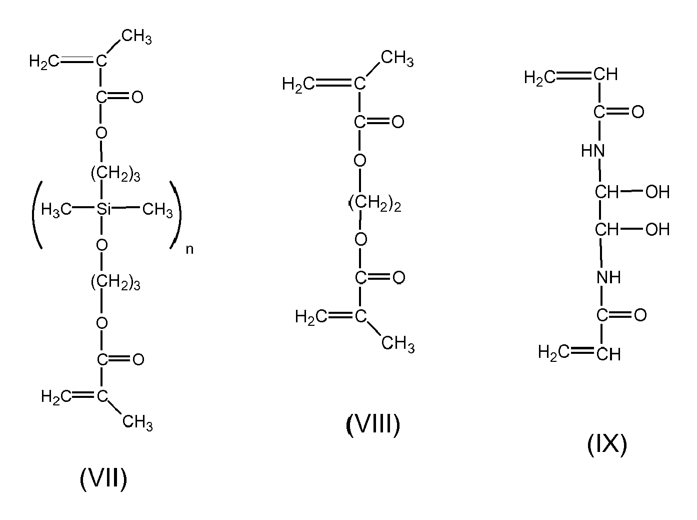

Typically, in a polymer of the present invention, the number ratio S¹: S²-sidechains, (i.e. the ratio of repeating units of said first type (with Fluorine-containing sidechains S¹) to repeating units of said second type (with Silicon-containing sidechains S²)) is in the range of from about 1:10 to about 10:1, such as about 1:1 to about 5:1, for example about 3:1. However polymers of the invention having ratios S¹:S² outside the above-mentioned range are also contemplated for use in surface director alignment layers.

Typically, in a polymer of the present invention, the number of repeating units of said first type together with the number of repeating units of said second type amounts to from about 10 to 100% of the total amount of repeating units in the polymer, such as from about 50 to 70%.

Typically, in a polymer of the present invention, the number ratio (S¹+S²): S⁴ sidechains (i.e. the ratio of repeating units of said first type (with Fluorine-containing sidechains S¹) plus repeating units of said second type (with Silicon-containing sidechains S²) to repeating units of said fourth type (with anchoring groups)) is in the range of from about 50:1 to about 100:1, such as from about 70:1 to about 90:1, for example from about 60:1 to about 80:1.

Typically, in a polymer of the present invention, the number ratio (S¹+S²): crosslinking groups is in the range from about 20:1 to about 100:1, such as from about 30:1 to about 50:1.

However, it is to be noted that the optimum ratios between sidechains/repeating units of different types in a polymer of the present invention in its function as or in surface director alignment layer should be assessed on an individual polymer basis.

Typically, the repeating units of different types (first, second, third, fourth, fifth, etc, ) are essentially randomly distributed along the polymer backbone. This random orientation is typically obtained by self-organization of the repeating units and sidechains (i.e. the position of the repeating units of different types are not actively controlled). However, due to the chemical incompatibility, the S¹ and S²-containing repeating units tends to arrange them selves in small domains of a few repeating units. Hence, the polymer tends to form domains of S¹-containing repeating units and small domains of S²-containing repeating units.

The weight average molecular weight of the polymer of a present invention for use in a surface director alignment layer is typically, however not limited to, in the range of from about 20 000 to about 150 000 Da, such as from about 40 000 to about 100 000 Da, for example from about 50 000 to about 80 000 Da. However, polymers of the present invention having molecular weights outside the above mentioned range are also contemplated for use in surface director alignment layers, and the optimum polymer weight to function as surface director alignment layers should be assessed on an individual polymer basis.

The polymer backbone of the polymer of the present invention may in principle be any organic polymer backbone on which it is possible to attach the side groups as mentioned in the present specification.

Preferably, the polymer backbone should essentially not comprise any Silicon or Fluorine atoms, which instead preferably are constrained to the silicon and fluorine containing sidechains S² and S¹, respectively.

Typically, the polymer backbone is such a backbone obtainable by polymerization (co-polymerization ) of monomers of one or more of the following types: (meth)acrylates, (meth)acrylamides, vinyls, styrenes, vinylidenic monomers, such as α-methylstyrene monomers, optionally substituted on the phenyl ring, and dienes.

Non-limiting examples of polymer backbones thus includes poly(meth)acrylates, poly(meth)acrylamides, polyvinyls, polyvinylalcohols, polystyrens, polydienes, poly(α-methylstyrene), isoprene and copolymers of two or more thereof.

The polymer of the invention may thus, for example, be a sidechain-functionalized poly(meth)acrylate, poly(meth)acrylamide, polyvinyl, polyvinylalcohol, polystyrene, polydiene poly(α-methylstyrene), isoprene and copolymers of two or more thereof etc.

In preferred embodiments, it is preferred that the polymer backbone forms a continuous, uninterrupted stretch of carbon atoms running through all repeating units of the polymer.

Pairs of carbon atoms in this stretch of carbon atoms may independently be bonded by single, double or triple carbon-carbon bonds, or may be part of a conjugated system of distributed aromatic bonds.

Except for the sidechains of types S¹, S², etc, other groups, preferably optionally substituted hydrocarbon groups, heteroatom containing groups, hydroxyl groups or the like may be attached to the polymer backbone.

The presence of such groups are not referred to as functionalization of the polymer in the context of the present invention.

A polymer backbone forming a continuous chain of carbon atoms is only to a small extent subject to degradation, such as hydrolytic and/or oxidative degradation. Hence, the polymer chain is stable towards degradation.

The polymer of the present invention may be synthesized by methods well known to those skilled in the art, typically using one or a combination of the following approaches:
In a first approach, the sidechains S¹, S², etc, are grafted onto a pre-polymerized polymer backbone. In a first variant of this first approach, the sidechains are first attached to the linker fragment and this linker-sidechain assembly is then grafted onto the side polymer backbone. In a second variant of this first approach, the linker fragment is grafted onto the polymer backbone, and the sidechain is thereafter attached to the grafted linker fragment.
In a second approach, the polymer of the present invention is synthesized by co-polymerization of different monomers where the monomers comprises sidechains, such as S¹, S², S⁴, etc.

In a combination of the first and the second approach, some of the sidechains are attached to the polymer of the invention by means of copolymerization according to the above-mentioned second approach, and some of the sidechains are grafted onto the polymer backbone in accordance with the above-mentioned first approach.

Four illustrative synthesis schemes are given below in reaction schemes I to IV, where reaction scheme I illustrates the above-mentioned first approach, synthesis scheme II illustrates the above-mentioned second approach, and reaction schemes III and IV illustrates the above-mentioned combination approach.

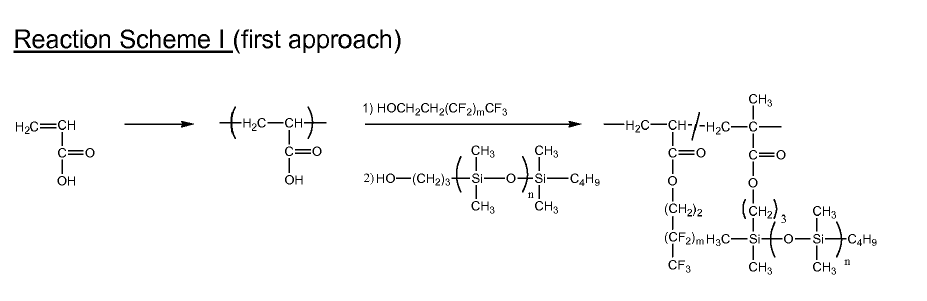

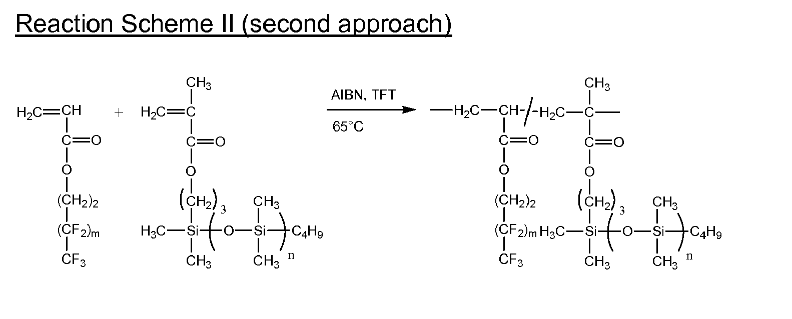

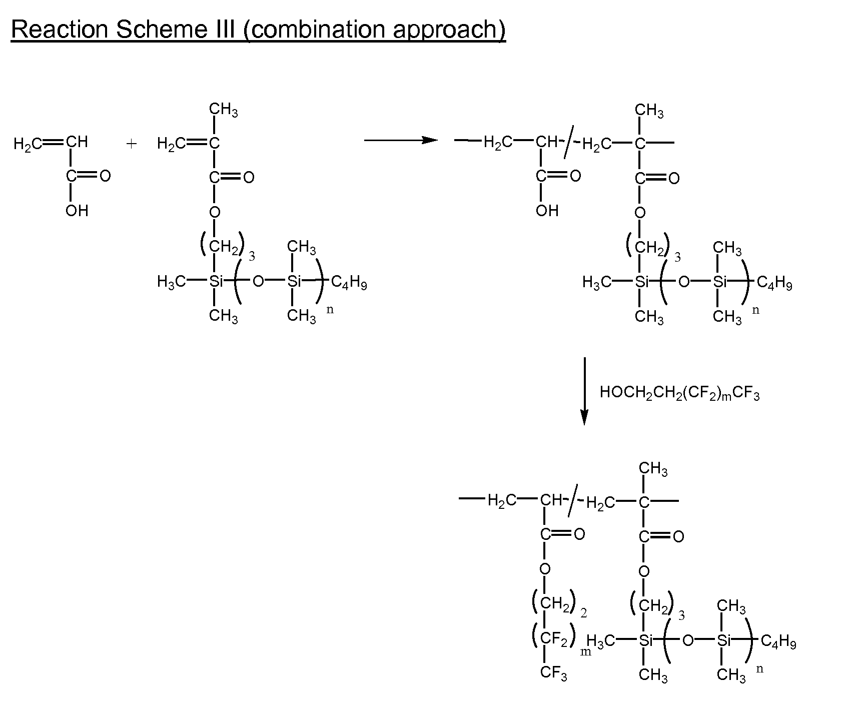

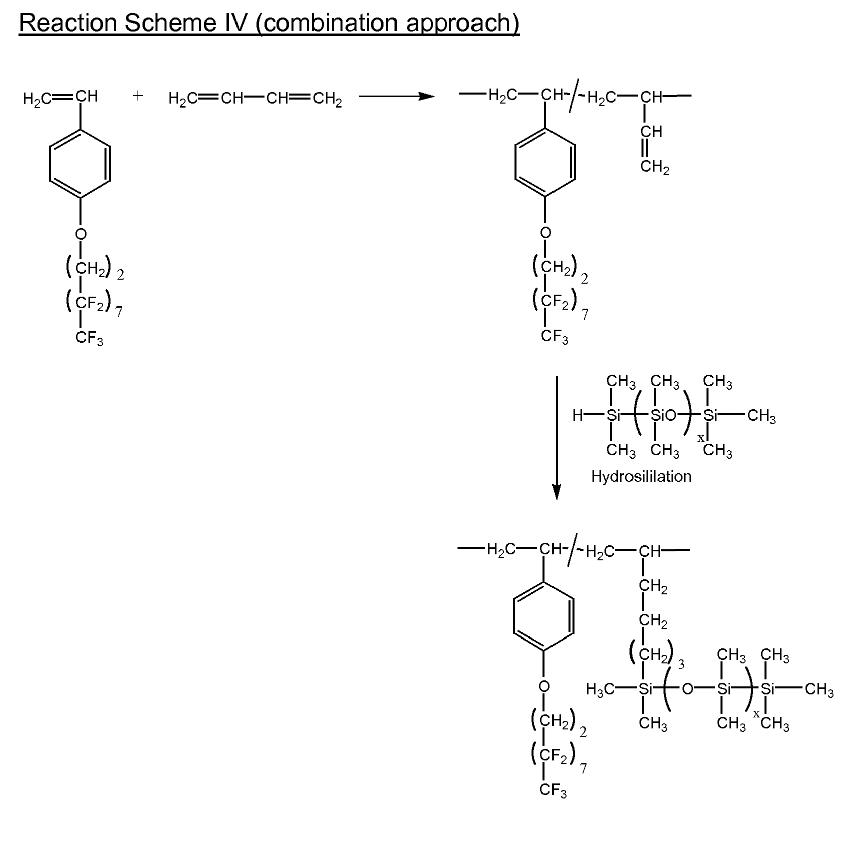

It is to be noted that the above reaction schemes are only intended to illustrate the different synthesis approaches, and even though the above reaction schemes only illustrates this for a polymer only comprising S¹ and S²-sidechain-containing repeating units, it is obvious to those skilled in the art that this approach can be extended to also encompass polymers with different types of repeating units, such as, but not limited to repeating units of the third, fourth, fifth, sixth and seventh type as described in the present specification.

The polymer of the invention is suitable for use as or in a surface director alignment layer due to its capability to promote homeotropic alignment of liquid crystal material in contact with the polymer.

A surface director alignment material of the present invention thus comprises at least one polymer of the present invention, as is described above, alone or in combination with at least one second polymer.

The at least one polymer of the present invention may be a single type of such a polymer, or may be two or more distinct types of polymers, each however encompassed by the scope of the present invention.
In other embodiments, the surface director alignment material of the present invention further comprises at least one additional polymer, on its own not being protected by the scope of the invention.

The purpose of this at least one additional polymer may for example be: to form an embedding matrix for the inventive polymer, such as to firmly attach the alignment material to a substrate; to effectively reduce the concentration of the inventive polymer in the inventive alignment material; or to promote an effective homogeneous and stable homeotropic alignment layer.

The additional polymer for use in a surface director alignment material of the present invention may be a cross-linked or non-cross linked polymer.

A surface director alignment layer is a layer which in contact with a liquid crystal material, tends to align the mesogens, at least at or near the interface between the liquid crystal material and the alignment layer. A surface director alignment layer comprising a polymer of the present invention tends to align the mesogens in a homeotropic alignment, which is advantageous in many applications, as is commonly known to those skilled in the art.

Typically, the surface alignment layer is arranged on a substrate. Such a surface director alignment layer is manufactured by providing a substrate and arranging a surface director alignment material of the present invention on the substrate.

In a first embodiment, a surface director alignment material of the present invention is provided and dissolved, dispersed or dispended in a liquid medium, such as a volatile solvent. The solution/dispersion/suspension is then coated on a substrate surface, followed by removal of the liquid medium. Suitable coating methods include, but are not limited to, spin-coating, roll-coating, spray-coating, etc.

In a second embodiment, precursors, such as a mixture of monomers and/or pre-polymers, to a surface director alignment material in a liquid medium, as a reaction mixture, is coated on a substrate surface, followed by in-situ polymerization into a surface director alignment material of the present invention directly on the substrate surface.

A liquid crystal device of the present invention comprises at least one confining substrate, a liquid crystal bulk layer and a surface director alignment layer arranged between said liquid crystal bulk layer and said substrate, wherein said surface director alignment layer comprises at least one polymer of the present invention.

A liquid crystal device of the present invention may be single-sided, where the liquid crystal material is arranged on one confining substrate, having an open interface at the other side, or double sided, where the liquid crystal material is sandwiched between a first and a second substrate.
In a double sided liquid crystal device, a surface director alignment material of the present invention may be disposed only on one side, i.e. between liquid crystal material and the one of the substrates, or on both sides, i.e. between the liquid crystal material and both substrates. The liquid crystal device may be double sided but with alignment layer of present invention deposited only onto one of the confining substrates.

The presence of a surface director alignment layer comprising a polymer of the present invention results in a homeotropic alignment of the liquid crystal material, at least at or near the interface towards the alignment layer.

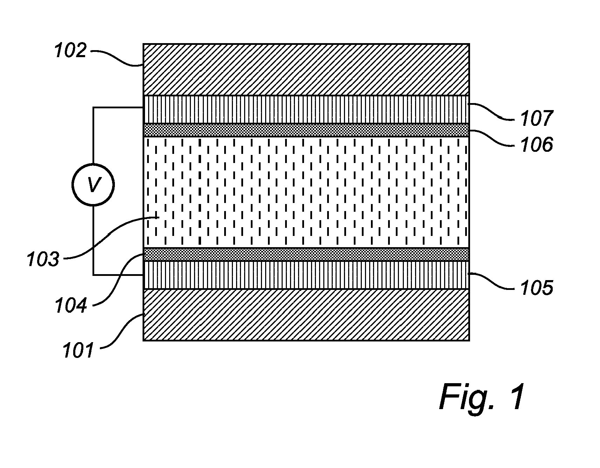

A double-sided liquid crystal device 100 is illustrated in figure 1 and comprises a first confining substrate 101 and a second confining substrate 102 being mutually spaced apart. In the space between the substrates 101, 102, a liquid crystal material 103 is disposed, sandwiched between the substrates 101 and 102.

On the first substrate 101 is arranged a surface director alignment layer of the present invention 104 in contact with the liquid crystal material 103. Depending on the presence of anchoring side groups on the polymer of the present invention, the surface director alignment layer 104 may be chemically bonded to the substrate 101.

The surface director alignment layer 104 comprises at least one polymer of the present invention as is described above and hence, this surface director alignment layer 104 promotes a homeotropic alignment of the liquid crystal material 103 at least at or near the interface towards the surface director alignment layer 104.

Those skilled in the art will recognize that a liquid crystal device 100 of the present invention may comprise means for obtaining an electrical field in the liquid crystal material 103. Changes in the electrical field typically effects switching of the liquid crystal material.

For example such means may be represented by a pair of electrodes. In the embodiment described in figure 1, a first electrode 105 is arranged between the alignment layer 104 and the substrate 101, and a second electrode 107 is arranged on the second substrate 102.

The surface-director alignment layer 104 will induce a homeotropic alignment of the surface director of the liquid crystal material 103.

A second alignment layer 106 is arranged between the second substrate 102 and the liquid crystal material 103. This second alignment layer may also comprise a polymer of the present invention, or may alternatively be of another kind of alignment layer material, as is known to those skilled in the art.

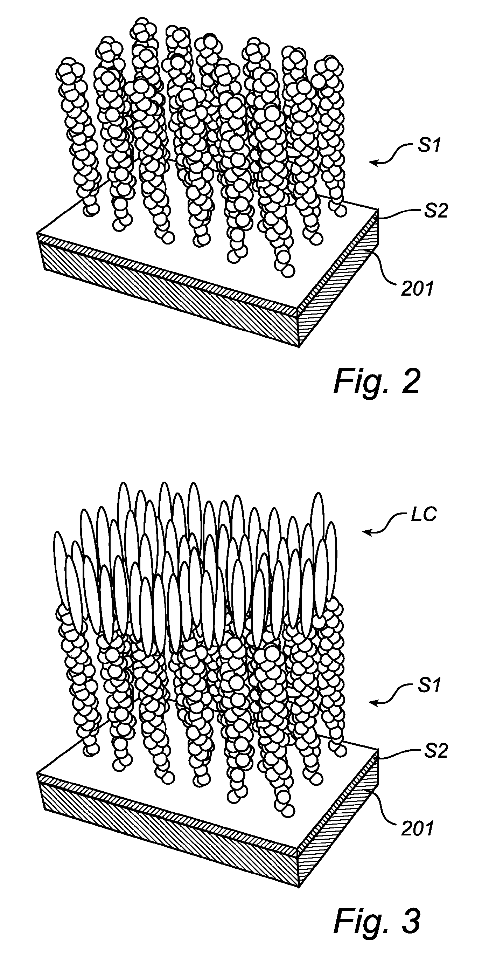

Without wishing to be bound to any specific theory, it is speculated that the following describes the homeotropic alignment properties of the polymer of the invention: It has been shown that the S²-sidechains present in the alignment material was segregated from the S¹ sidechains of the material so that S²-sidechains covers the substrate surface whereas the S¹ moieties segregates in a layer floating over the S² side chains. The S² (siloxane) sidechains typically has a relatively high affinity for the confining substrates, and therefor, due to the incompatibility towards the S¹ (fluorine) side chains the S² chains spreads close to the substrate. On the other hand, the incompatibility between the S¹-side chains and the S²-side chains forces the S¹ sidechains to stand up, essentially vertical, from the substrate surface. Figure 2 is a schematic illustration of this arrangement, displaying a substrate 201, on which an alignment layer, comprising a polymer of the present invention is arranged, with the S¹-sidechains standing up from the substrate and the S²-sidechains forming a surface covering layer on the substrate, The self-assembly of the perfluorinated side chains on a continuous array as sketched in figure 2 is driven by oleophobicity of the fluorinated side chains. The depicted structural features have been suggested on the basis of information gained by Near-Edge-X-Ray Absorption Fine Structure (NEXAFS). The vertical alignment of the fluorinated side-chains, however, promote homeotropic alignment og the liquid crystal in contact with the alignment layer of present invention as depicted in Figure 3, illustrating the same arrangement as in figure 2, and additionally illustrating the homeotropic orientation of liquid crystal molecules, LC, in contact with the alignment layer.

The distribution of fluorine containing side chain (S¹) present in polymers of the present invention in alignment layers on substrate surfaces, obtained by spin coating or UV induced photopolymerization, appeared to be homogeneous as demonstrated by Angle-dependent X-ray Photoelectron Spectroscopy (AD-XPS) and Polarized Light Fourier Transform Infra Red Spectroscopy (PL-FTIR).

The homogeneity of fluorine surface distribution remains even after soaking of the specimen in water medium, as shown by the tiny variation of surface wettability as detected by static and dynamic contact angle measurements. This was confirmed by AD-XPS and PL-FTIR measurements.

### Experiments

### EXAMPLE 1

### Synthesis of acrylate based graft copolymers by free radical polymerization

A solution of 4.5g (8,68 mmol) of 1 H,1H,2H,2H-perfluorodecyl acrylate (AF8), 11.4g (2.28 mmol) of monomethacryloxypropyl terminated polydimethylsiloxane (MCR-M17, M.W.=5000) and 0.176 mg of AIBN as radical initiator in trifluorotoluene was introduced in a glass vial, degassed by several freeze-thaw cycles and sealed under vacuum. The vial was sealed under vacuum and placed into an oil bath equipped with a digital temperature controller and a magnetic stirrer. The polymerization reaction was allowed to proceed for 48 hours at 65°C and stopped by cooling at room temperature. The polymer formed was purified by repeated precipitations from chloroform or trifluorotoluene solutions into methanol and 1-butanol at 0°C.

The molar ratio between the perfluorinated and the polysiloxane comonomer in the final copolymer was calculated from the ¹HNMR spectrum and resulted 3/1 considering the peak integrals at 4.35 ppm for the methylene adjacent to the oxygen of the perfluorinated moiety and at 3.95 ppm for the methylene adjacent to the oxygen of the polysiloxane moiety.

A small amount of the copolymer was deposited onto clean glass substrates by spin coating of a solution of the copolymer (1 %) in THF (tetrahydrofuran). After deposition, the glass substrates were heated up to 120°C in order to remove the solvent. The thickness of the copolymer alignment layer was found to be about 100nm.

Two such substrates were assembled in a sandwich cell with their alignment layers facing each other. The cell gap was fixed to about 3 µm by spacers. Liquid crystal material MLC6882 (Δε<0) (Merck, Ltd) was introduced in the cell gap by capillary forces.

The alignment in the cell was inspected by polarizing microscope. The copolymer alignment material was found to promote homeotropic alignment.

### EXAMPLE 2

### Preparation of acrylate based graft copolymer film by UV induced radical polymerization

A solution containing 28.5 mg (0,055 mmol) of 1H,1H,2H,2H-perfluorodecyl acrylate (AF8, M.W.=518), 171.0 mg (0.171 mmol) of monomethacryloxypropyl terminated polydimethylsiloxane (MCR-M11, M.W.=1000), and 5.0 mg (0.03 mmol) of 2-hydroxy-2-methylphenyl-1-propanone (HMPP, M.W.=164), also commercially identified as 'Darocure 1173' as a radical photoinitiator was prepared and diluted with 100 mL of diethylether. The obtained solution was deposited onto glass substrates, previously by spin coating. After that, the film was photopolymerized under UV irradiation at an energy level of 500 mJ/cm² for 2 sec by using a UV conveyor. The layer thickness obtained with this technique is in the nanometer order

Utilizing substrates covered with the graft polymer described in the example 2, sandwich cells were prepared and filled with the liquid crystal material MLC6882 (Δε<0). Excellent homeotropic alignment of the liquid crystal was observed. The sandwich cells were prepared following the procedure described in example 1.

### EXAMPLE 3

### Preparation of crosslinked acrylate based graft copolymer film by UV induced radical polymerization

A solution containing 86.7 mg (0,167 mmol) of 1H,1H,2H,2H-perfluorodecyl acrylate (AF8, M.W.=518), 104.2 mg (0.021 mmol) of monomethacryloxypropyl terminated polydimethylsiloxane (MCR-M17, M.W.=5000), 1.8 (0.009 mmol) mg of ethyleneglycol dimethacrylate (EGDMA, M.W.=198.22) as a crosslinker and 4.8 mg (0.02 mmol) of 2-Hydroxy-2-phenylacetophenone (Benzoin) (M.W.=212.25), as a radical photoinitiator was prepared and diluted with 100 mL of diethylether. The so obtained solution was spin coated on a glass slide (76 x 26 mm) previously cleaned with acetone and photopolymerized under UV irradiation at an energy level of 500 mJ/cm² for 2 sec by using a UV conveyor. The layer thickness obtained with this technique is in the nanometer order.

Utilizing substrates covered with the graft copolymer described in the example 3 sandwich cells were prepared and filled with the liquid crystal material MLC6882 (Δε<0). Excellent homeotropic alignment of the liquid crystal was observed. The sandwich cells were prepared following the procedure described in example 1.

### EXAMPLE 4

### Preparation of acrylate based graft copolymer film containing an anchoring group by UV induced radical polymerization

A solution containing 17.0 mg (0,028 mmol) of 1H,1H,2H,2H-perfluorododecyl acrylate (AF10, M.W.=618), 171.7 mg (0.034 mmol) of monomethacryloxypropyl terminated polydimethylsiloxane (MCR-M17, M.W.=5000), 1.2 mg (0.007 mmol) of 2-isocyanatoethylmethacrylate (IEMA, M.W.=155.15) as anchoring group and 5.0 mg (0.03 mmol) of 2-hydroxy-2-methylphenyl-1-propanone (HMPP, M.W.=164), ('Darocure 1173') as a radical photoinitiator was prepared and diluted with 100 mL of diethylether.

The obtained solution was spin coated on a glass slide (76x26 mm) previously cleaned with acetone and photopolymerized under UV irradiation at an energy level of 500 mJ/cm² for 2 sec by using a UV conveyor. The layer thickness obtained with this technique is in the order of nanometers.

Sandwich cells, whose substrates were covered with alignment layer made by the graft polymer with anchoring group described in this example, were filled with the liquid crystal material MLC6882. Good homeotropic alignment of the liquid crystal was found in these cells. The sandwich cells were prepared following the procedure described in example 1.

### EXAMPLE 5

### Preparation of acrylate based graft copolymer film containing an anchoring group by UV induced radical polymerization using a different photoinitiator

A solution containing 16.7 mg (0,027 mmol) of 1H,1H,2H,2H-perfluorododecyl acrylate (AF10, M.W.=618), 175.2 mg (0.035 mmol) of monomethacryloxypropyl terminated polydimethylsiloxane (MCR-M17, M.W.=5000), 1.0 mg (0.006 mmol) of 2-isocyanatoethylmethacrylate (IEMA, M.W.=155.15) as anchoring group and 4.2 mg (0.02 mmol) of 2-Hydroxy-2-phenylacetophenone (Benzoin) (M.W.=212.25), as a radical photoinitiator was prepared and diluted with 100 mL of diethylether. The obtained solution was spin coated on a glass slide (76x26 mm) previously cleaned with acetone and photopolymerized under UV irradiation at an energy level of 500 mJ/cm² for 2 sec by using a UV conveyor. The layer thickness obtained with this technique is in the order of nanometers.

The sandwich cells containing alignment layer made by the graft polymer with anchoring group, described in the example 5, and filled with the liquid crystal material MLC6882 were found to exhibit good homeotropic alignment. The sandwich cells were prepared following the procedure described in example 1.

### EXAMPLE 6

### Preparation of acrylate based graft copolymer film containing an aliphatic group by UV induced radical polymerization

A solution containing 68.2 mg (0,110 mmol) of 1H,1H,2H,2H-perfluorododecyl acrylate (AF10,M.W.=618), 119.5 mg (0.119 mmol) of monomethacryloxypropyl terminated polydimethylsiloxane (MCR-M11, M.W.=1000), 11.7 mg (0.082 mmol) of butylmethacrylate (BMA, M.W.=142.20) as aliphatic group and 5.0 mg (0.03 mmol) of 2-hydroxy-2-methylphenyl-1-propanone (HMPP, M.W.=164), ('Darocure 1173') as a radical photoinitiator was prepared and diluted with 100 mL of diethylether.

The obtained solution was spin coated on a glass slide (76x26 mm) previously cleaned with acetone and photopolymerized under UV irradiation at an energy level of 500 mJ/cm² for 2 sec by using a UV conveyor. The layer thickness obtained with this technique is in the order of nanometers.

Sandwich cells containing alignment layer, made from the graft polymer described in this example, and the liquid crystal material MCLC6882 were found to exhibit good homeotropic alignment. The sandwich cells were prepared following the procedure described in example 1.

### EXAMPLE 7

### Preparation of acrylate based graft copolymer film containing a mesogenic group by UV induced radical polymerization

A solution containing 12.2 mg (0,020 mmol) of 1H,1H,2H,2H-perfluorododecyl acrylate (AF10, M.W.=618), 179.5 mg (0.180 mmol) of monomethacryloxypropyl terminated polydimethylsiloxane (MCR-M11, M.W.=1000), 18.4 mg (0.050 mmol) of 6-[4-(4-Cyanophenyl)phenoxy]hexyl methacrylate (M.W.=363.45) as aliphatic group and 5.0 mg (0.02 mmol) of 2-Hydroxy-2-phenylacetophenone (Benzoin) (M.W.=212.25), as a radical photoinitiator was prepared and diluted with 100 mL of diethylether. The obtained solution was spray coated on a glass slide (76x26 mm) previously cleaned with acetone and photopolymerized under UV irradiation at an energy level of 500 mJ/cm² for 2 sec by using a UV conveyor. The layer thickness obtained with this technique is in the order of nanometers.

Good homeotropic alignment was found in cells containing alignment layer, made from the graft polymer described in this example, and the liquid crystal MLC6608 (Δε<0). The sandwich cells were prepared following the procedure described in example 1.

### EXAMPLE 8

### Preparation of a crosslinked polymer blend containing the polymer of claim 2 and a crosslinkable polymer matrix containing silicon atoms by UV induced radical polymerization.

A solution containing 4.8 mg of the copolymer synthesized according to the procedure reported in example 1, 49.2 mg (0.010 mmol) of monomethacryloxypropyl terminated polydimethylsiloxane (MCR-M17, M.W.=5000), 147.2 mg of (acryloxypropyl)methylsiloxane-dimethylsiloxane copolymer (UMS-182, 15-20 mol%(acryloxypropyl)methylsiloxane) as a crosslinkable matrix and 5.0 mg (0.03 mmol) of 2-hydroxy-2-methylphenyl-1-propanone (HMPP, M.W.=164), ('Darocure 1173') as a radical photoinitiator was prepared and diluted with 100 mL of diethylether. The obtained solution was spray coated on a glass slide (76 x 26 mm) previously cleaned with acetone and photopolymerized under UV irradiation at an energy level of 500 mJ/cm² for 2 sec by using a UV conveyor. The layer thickness obtained with this technique is in the order of nanometers.

Alignment layer made from the material described in the example 8 was found to promote good homeotropic alignment in sandwich cells filled with MLC6608. The sandwich cells were prepared following the procedure described in example 1.

### EXAMPLE 9

### Preparation of crosslinked acrylate based graft copolymer film containing a polysiloxane crosslinkable matrix by UV induced radical polymerization

An homogeneous solution containing 15.0 mg (0,030 mmol) of 1H,1H,2H,2H-perfluorodecyl acrylate (AF8, M.W.=518), 43.7 mg (0.009 mmol) of monomethacryloxypropyl terminated polydimethylsiloxane (MCR-M17, M.W.=5000), 131.2 mg of (acryloxypropyl)methylsiloxane-dimethylsiloxane copolymer (UMS-182, 15-20 mol%(acryloxypropyl)methylsiloxane) as a crosslinkable matrix and 5.0 mg (0.03 mmol) of 2-hydroxy-2-methylphenyl-1-propanone (HMPP, M.W.=164), ('Darocure 1173') as a radical photoinitiator was prepared and diluted with 100 mL of diethylether. The obtained solution was spray coated on a glass slide (76 x 26 mm) previously cleaned with acetone and photopolymerized under UV irradiation at an energy level of 500 mJ/cm² for 2 sec by using a UV conveyor. The layer thickness obtained with this technique is in the order of nanometers.

The alignment layer made from the material described in this example was found to promote also good homeotropic alignment in sandwich cells containing MLC6608. The sandwich cells were prepared following the procedure described in example 1.

### EXAMPLE 10

### Preparation of crosslinked acrylate based graft copolymer film containing a polysiloxane crosslinkable matrix and an anchoring group by UV induced radical polymerization

An homogeneous solution containing 17.0 mg (0,033 mmol) of 1H,1H,2H,2H-perfluorodecyl acrylate (AF8, M.W.=518), 78.3 mg (0.078 mmol) of monomethacryloxypropyl terminated polydimethylsiloxane (MCR-M11, M.W.=1000), 94.8 mg of (acryloxypropyl)methylsiloxane-dimethylsiloxane copolymer (UMS-182, 15-20 mol% (acryloxypropyl)methylsiloxane) as a crosslinker, 6.5 mg (0.050 mmol) of 2-hydroxyethylmethacrylate (HEMA, M.W.=130) as anchoring group and 5.0 mg (0.03 mmol) of 2-hydroxy-2-methylphenyl-1-propanone (HMPP, M.W.=164), ('Darocure 1173') as a radical photoinitiator was prepared and diluted with 100 mL of diethylether. The obtained solution was spray coated on a glass slide (76x26 mm) previously cleaned with acetone and photopolymerized under UV irradiation at an energy level of 500 mJ/cm² for 2 sec by using a UV conveyor. The layer thickness obtained with this technique is in the order of nanometers.

Alignment layer prepared from the material described in example 10 was found to promote homeotropic alignment in sandwich cell containing the liquid crystal material MLC6608. The sandwich cells were prepared following the procedure described in example 1.

## Claims

1. A polymer for use in an alignment layer for a liquid crystal material, comprising a polymer backbone comprising a plurality of repeating units, said repeating units being divided into at least two groups, wherein
- each repeating unit in a first group of said repeating units is functionalized with a pendant sidechain of a first type S¹;
- each repeating unit in a second group of said repeating units is functionalized with a pendant sidechain of a second type S²;
- said first type of sidechain S¹ comprising a fluorine substituted hydrocarbon group; and
- said second type of sidechain S² comprising a siloxane.

2. A polymer according to claim 1, wherein each of said sidechains S¹ independently comprises a Cₙ-fluoroalkyl group, preferably a Cₙ-perfluoroalkyl group, where n = 2 to 15, for example 6 to 12, such as 8 to 10.

3. A polymer according to claim 1 or 2, wherein each of said sidechains S² independently comprises a Siₘ-siloxane chain, where m = 2 to 130, for example 20 to 80, such as 60 to 70.

4. A polymer according to claim 2 and 3, wherein the ratio n/m is from 4/3 to 12/130.

5. A polymer according to any of the preceding claims, wherein said sidechain of a first type S¹ and said side chain of a second type S² each independently are attached to said polymer backbone by a linker group, preferably comprising from 2 to 10, such as 4 to 8, linker atoms.

6. A polymer according to any of the preceding claims, further comprising a third group of repeating units, wherein each repeating unit in said third group is non-functionalized.

7. A polymer according to any of the preceding claims, further comprising a fourth group of repeating units, wherein each repeating unit in said fourth group is functionalized by a pendant side chain, S⁴, capable of anchoring said polymer to a substrate.

8. A polymer according to any of the preceding claims further comprising a fifth group of repeating units, wherein each repeating unit in said fifth group independently is functionalized by pendant sidechain S⁵ selected from an aliphatic and an aromatic group.

9. A polymer according to any of the preceding claims, further comprising a sixth group of repeating units, wherein each repeating unit in said sixth group is functionalized by a side chain S⁶ comprising a mesogenic group.

10. A polymer according to any of the preceding claims, wherein said polymer is crosslinked by at least one crosslinking group.

11. A polymer according to any of the preceding claims, wherein said polymer backbone forms a continuous stretch of carbon atoms formed by said repeating units.

12. A surface director alignment layer material, comprising at least a one polymer according to any of the claims 1-11 and optionally at least one additional polymer.

13. A liquid crystal device comprising at least one confining substrate, a liquid crystal bulk layer and a surface director alignment layer arranged between said liquid crystal bulk layer and said substrate, wherein said surface director alignment layer comprises at least one polymer according to any of the claims 1-11 or composition according to claim 12.

14. A method for the manufacture of a liquid crystal device according to claim 13, comprising the steps of:
a. providing a confining substrate;
b. arranging a polymer according to any of the claims 1-11 or a surface director alignment material according to claim 12 on a surface of said substrate; and
c. arranging a liquid crystal bulk material in contact with said polymer.

15. A method according to claim 14, wherein the step of arranging said polymer on said substrate comprises in-situ polymerization of said polymer on said substrate.
